(19) Europäisches Patentamt / European Patent Office / Office européen des brevets

(11) **EP 2 542 091 B1**

(12) **EUROPEAN PATENT SPECIFICATION**

(45) Date of publication and mention of the grant of the patent:
**12.04.2017   Bulletin 2017/15**

(21) Application number: **11707057.3**

(22) Date of filing: **28.02.2011**

(51) Int Cl.:
*A21D 13/00* *(2017.01)*

(86) International application number:
**PCT/US2011/026494**

(87) International publication number:
**WO 2011/109300 (09.09.2011 Gazette 2011/36)**

(54) **SHELF-STABLE, SAVORY, FILLED FOOD PRODUCTS AND METHODS**

LAGERBESTÄNDIGE HERZHAFTE GEFÜLLTE LEBENSMITTELPRODUKTE UND VERFAHREN

PRODUITS ALIMENTAIRES FOURRÉS, SAVOUREUX, DE LONGUE CONSERVATION ET PROCÉDÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.11.2010   US 409834 P**
**01.03.2010   US 309255 P**

(43) Date of publication of application:
**09.01.2013   Bulletin 2013/02**

(73) Proprietor: **Intercontinental Great Brands LLC**
**East Hanover, NJ 07936 (US)**

(72) Inventors:
• **COLEMAN, Edward, C.**
**New Fairfield**
**CT 06812 (US)**
• **THULIN, Daniera, Z.**
**Budd Lake**
**NJ 07828 (US)**
• **VEMULAPALLI, Vani**
**Whippany**
**NJ 07981 (US)**

(74) Representative: **Boult Wade Tennant**
**Verulam Gardens**
**70 Gray's Inn Road**
**London WC1X 8BT (GB)**

(56) References cited:
**EP-A1- 1 133 920     EP-A1- 1 249 170**
**EP-A1- 1 658 773     EP-A2- 0 916 263**
**EP-A2- 1 036 501     EP-A2- 1 036 504**
**US-A- 4 721 622       US-A- 5 059 433**
**US-A- 5 145 699**

• **DATABASE Gnpd [Online] Mintel; January 2010 (2010-01), Anonymous: "Cheese-filled tortellini", XP002632855, Database accession no. 1256348**
• **DATABASE Gnpd [Online] Mintel; January 2010 (2010-01), Anonymous: "Italian raw ham tortellini", XP002632856, Database accession no. 1235503**

**Description**

<u>FIELD</u>

Shelf-stable, savory, filled food products, as well as methods for making such products, are described herein.

<u>BACKGROUND</u>

Intermediate moisture baked food products, such as brownies, blondies, sponge cakes, muffins, cupcakes, pan cakes, breads, and the like, typically have a water activity ($a_w$) of about 0.5 to 0.85. Many of these products have high sugar content, not only for providing a sweet flavor to the product but also to enhance microbial stability. Control of water activity can be important in packaged food products as maintaining a specified moisture level can affect shelf life. Generally, lowering the moisture level will positively extend shelf life and reduce growth of microbes. Moisture level may also affect flavor profile and texture of the product over the shelf life of the product.

Baked food products having components that vary by texture and/or moisture level are particularly challenging from a shelf life perspective. For example, some baked dough products have soft, moist fillings and a baked casing that enrobes the filling. Over the shelf life, water can move or equilibrate among the components, which may reduce desired texture variations and desired organoleptic properties of either or both components. A bread casing can take on a 'soggy' texture as moisture migrates away from the filling, which also can leave the filling dry and crumbly. Similarly, moisture can migrate from a higher water activity baked dough into the filling, which can leave the baked dough with a dried out and tough texture.

Many known filled products having intermediate moisture levels are frozen or refrigerated to extend shelf life and/or to maintain desired texture variation of the components. Control of moisture migration in non-refrigerated, baked products having at least two components with two different water activities, such as a bread casing and filling, has been attempted by adding an intermediate moisture barrier layer between the casing and filling. Attempts to control moisture migration include edible, water-impermeable or water-insoluble films, such as sodium alginate, or intermediate "cake" layers as described, for example, in U.S. Patent No. 5,145,699 to Dijkshoorn et al. The intermediate cake layers often do not provide desirable organoleptic properties and the edible films provided within the product to maintain texture variation are often discontinuous or break and do not provide a sufficient moisture barrier. The films are also often not perceived well by consumers.

While there have been significant advances in the art, further advances are possible. It is desirable to have a filled intermediate moisture baked product that could be stored at ambient temperature, yet maintain desired texture variation over an extended, non-refrigerated shelf life. Further, it is desirable to develop shelf-stable, savory baked products having a soft filling. In the art, sweet, intermediate moisture products are more common than savory products due to microbial control through the use of large amounts of crystalline sugars, such as sucrose, lactose, fructose and glucose.

EP 1133920 discloses a method for the preparation of a filled savory snack.

US 4,721,622 discloses shelf stable, filled food and a method of manufacture.

US 5,059,433 discloses a method of preparing shelf stable, filled dough products.

EP 1036504 discloses a shelf-stable snack bar with crust and filling.

<u>SUMMARY</u>

Shelf-stable, savory, filled food products and methods for making the filled food products are provided herein. The savory, filled food products include at least two components having different textures, such as a baked dough component having the texture of bread and a creamy filling component. The savory filled food products have an intermediate water activity (e.g., about 0.5 to about 0.8), which promotes increased shelf life at room temperature. The filled food products have a

shelf life of at least about six months when stored at 21°C (70° F) in hermetically sealed film packaging. Advantageously, the components of the food products provided herein retain their respective textures throughout the at least six month shelf life. For purposes herein, the term "shelf-stable" and reference to "shelf life of at least about six months" mean that the filled food product has an aerobic plate count (APC) of less than about 200 CFU/g, yeast at levels less than about 10 CFU/ g, mold at levels less than about 10 CFU/ g, and coliforms at less than 3 MPN/ g for at least six months when stored at 21°C (70° F) in hermetically sealed film packaging of biaxially oriented polypropylene/ polyester-PETP-MET/polypropylene-BOPP/polyester-PETP-MET having a maximum $CO_2$ transmission rate of 0.1 cc/100in$^2$/atm/d and a maximum water vapor transmission rate of 0.03 g/100in$^2$/d.

In one aspect the present disclosure provides a baked food product having at least two components and at least two different textures, the baked food product comprising:

a baked dough component having a water activity of 0.5 to 0.8, wherein the baked dough component is made from a dough comprising 21.0 to 70.0 percent flour, 0.5 to 5 percent emulsifier, 0.1 to 10 percent enzyme, 0.5 to 5.0 percent leavening agent, 0.2 to 15.0 percent solid fat at room temperature, 0.4 to 20.0 percent liquid oil at room temperature, 0.5 to 5 percent hydrocolloid, 0.5 to 10.0 percent insoluble fiber, and 0.5 to 10.0 percent polyol; and a filling component having a water activity of 0.4 to 0.9, wherein the filling component comprises 10.0 to 95.0 percent flavor component, 0.5 to 15.0 percent hydrocolloid, 0.5 to 6.0 percent emulsifier, 0.5 to 10.0 percent polyol, 2.0 to 25.0 percent solid fat at room temperature, 2.0 to 20.0 percent liquid oil at room temperature, and 0.5 to 15.0 percent soluble fiber;
the baked dough component enrobing the filling component;

the baked dough component having a different texture from the texture of the filling component;

the ratio of the water activities of the baked dough component to the filling component being 0.5:0.4 to 0.8:0.9;
the baked food product having less than 30 percent sugar based upon the weight of the baked food product;
the baked food product comprising 60 to 80 percent baked dough component and 20 to 40 percent filling component;
the baked dough component and the filling component being in amounts and having water activities which are effective for providing the baked food product with a water activity of 0.5 to 0.8 after storage at room temperature for two weeks in a hermetically sealed film packaging; and the baked food product having a shelf life of at least six months when stored at 21°C (70°F) in hermetically sealed film packaging.

By one approach, the filling and baked dough are formulated and included in amounts effective to provide relative water activities that will equilibrate and provide an overall equilibrated water activity to the baked food product of about 0.6 to about 0.8 after storage for about two weeks at room temperature (e.g., about 20 to about 25°C (about 68 to about 77°F)) and have a shelf life of at least about six months when stored at 21°C (70° F) in hermetically sealed film packaging. In this aspect, the baked dough component has a water activity of from about 0.5 to about 0.8, the filling has a water activity of from about 0.4 to about 0.9, and the baked food product comprises about 60 to about 80 weight percent baked dough and about 20 to about 40 weight percent filling.

By another approach, the water activities of the baked dough component and filling component are sufficiently similar such that very little moisture migration occurs between the two components during storage at room temperature in a hermetically sealed film package. In this aspect, for example, an about 26 to about 33 gram sample comprising about 33 percent filling can be baked at about 190 to about 204°C (about 375 to about 400° F) for about 8 to about 10 minutes to provide a ratio of water activities of the baked dough component to the filling component of about 0.65:0.75 to about 0.75:0.65. After baking, the difference between the water activities of the filling and the baked dough component do not differ by more than 0.1 and, in one aspect, not more than about 0.04, and, in another aspect, not more than about 0.02. The water activity of the filled food product is not greater than about 0.8 after storage at 21°C (70°F) for six months. In this aspect, the filled food product comprises about 60 to about 80 percent baked dough component and about 20 to about 40 weight percent filling component, and the filled food product has less than 30 weight percent sugar based on the weight of the food product. In this aspect, the filled food product has a shelf life of at least about six months when stored at about 21°C (about 70° F) in hermetically sealed film packaging. As with other products and aspects described herein, in an important aspect, the baked dough component has the consistency of bread and has a density of about 0.1 g/cc to about 0.6 g/cc, in another aspect about 0.1 to about 0.5 g/cc, and in another aspect about 0.2 to about 0.5 g/cc.

By one approach, the baked filled food products are savory and do not include sugars in amounts that would provide a sweet flavor to the products. Accordingly, the products include less than about 30 weight percent sugar based upon the weight of the baked food product, in another aspect less than about 20 weight percent sugar, and in another aspect less than about 15 weight percent sugar.

In one important aspect, the water activity and texture of the two components in the filled food product can be maintained without an intermediate "cake-like" layer located immediately adjacent and abutting the filling of the food product, such as a "cake-like" layer having a density less than about 0.415 g/cc, or a cake layer prepared from a batter rather than a dough. The water activity and texture of the two components in the filled food product can also be maintained without an intermediate film layer that is provided otherwise than by pre-treating dough with steam to provide gelatinized starch that inhibits moisture migration between the baked dough component and filling.

In another aspect, an uncooked filled dough product having at least two components is provided. The uncooked filled dough product comprising: a dough component having a water activity of 0.7 to 0.9, wherein the uncooked dough component comprises 21.0 to 70.0 percent flour, 0.5 to 5 percent emulsifier, 0.1 to 10 percent enzyme, 0.5 to 5.0 percent leavening agent, 0.2 to 15.0 percent solid fat at room temperature, 0.4 to 20.0 percent liquid oil at room temperature, 0.5 to 5 percent hydrocolloid, 0.5 to 10.0 percent insoluble fiber, and 0.5 to 10.0 percent polyol; and a filling component having a water activity of 0.4 to 0.9, wherein the filling component comprises 10.0 to 95.0 percent flavor component, 0.5 to 15.0 percent hydrocolloid, 0.5 to 6.0 percent emulsifier, 0.5 to 10.0 percent polyol, 2.0 to 25.0 percent solid fat at room temperature, 2.0 to 20.0 percent liquid oil at room temperature, and 0.5 to 15.0 percent soluble fiber;

the dough component enrobing the filling component;

the dough component having a different texture from the texture of the filling component;

the uncooked filled dough product having less than 30 percent sugar;

the ratio of the water activities of the dough component to the filling component being 0.7:0.4 to 0.9:0.9;

the dough component comprising 65 to 85 percent of the uncooked filled dough product;

the filling component comprising 20 to 40 percent of the uncooked filled dough product;

the dough component and the filling component being in amounts and having water activities which are effective for providing, after baking, a baked food product with a water activity of 0.5 to 0.8 after storage at room temperature for two weeks in film packaging; and

the baked food product having a shelf life of at least six months when stored at 21°C (70°F) in film packaging. In another aspect the dough component has a water activity of about 0.75 to about 0.85, and a filling component having a water activity of about 0.65 to about 0.75. In one aspect, the dough component encases the filling component. In another aspect, the dough component partially encases the filling component. In another aspect, the uncooked filled dough product has less than 20 weight percent sugar and, in yet another aspect, the uncooked filled dough product has less than 15 weight percent sugar. In another aspect the ratio of the water activities of the dough component to the filling component range of 0.75:0.65 to 0.85:0.75. In one aspect, an about 26 to about 33 gram uncooked, filled dough product comprising about 33 percent filling can be baked at about 190 to about 204°C (about 375 to about 400° F) for about 8 to about 10 minutes to provide a baked product having a water activity of from about 0.6 to about 0.8 after storage at room temperature for two weeks in hermetically sealed film packaging.

Methods for preparing the filled savory food products also are provided. By one approach, a method of making a filled food product comprising:

mixing 21.0 to 70.0 percent flour, 0.5 to 5.0 percent leavening agent, 0.1 to 10 percent enzyme, 0.5 to 5 percent emulsifier, 0.2 to 15.0 percent solid fat at room temperature, 0.4 to 20.0 percent liquid oil at room temperature, 0.5 to 5 percent hydrocolloid, 0.5 to10.0 percent insoluble fiber, 0.5 to 10.0 percent polyol, water, sugar, and salt, to provide a dough component having a water activity of 0.7 to 0.9;

baking the dough component for a time and temperature effective for providing a baked dough component with a water activity of 0.5 to 0.8;

mixing 10.0 to 95.0 percent flavor component, 0.5 to 10.0 percent polyol, 0.5 to 15.0 percent hydrocolloid, 0.5 to 6.0 percent emulsifier, 2.0 to 25.0 percent solid fat at room temperature, 2.0 to 20.0 percent liquid oil at room temperature, 0.5 to 15.0 percent soluble fiber, and sugar, to provide a filling component having a water activity of 0.4 to 0.8;

filling the baked dough component with the filling component to provide the filled product;

the baked dough component having a different texture from the texture of the filling component;

the ratio of the water activities of the baked dough component to the filling component in the filled food product being 0.7:0.8 to 0.8:0.8 when stored after two weeks in hermetically sealed film packaging at room temperature;

the filled food product comprising 60 to 80 percent baked dough component and 20 to 40 percent filling component;

the baked dough component and the filling component being in amounts and having water activities which are effective for providing the filled food product with a water activity of 0.6 to 0.8 after storage at room temperature for two weeks in hermetically sealed film packaging at room temperature;

the filled food product having a shelf life of at least six months when stored at 21°C (70°F) in hermetically sealed film packaging. By one approach, the filling can be encased in the baked dough component. By another approach, the filling can be partially encased in the baked dough component such that at least a portion of the filling is exposed to the air.

In another aspect there is provided a method for making a baked filled dough product having at least two components, the method comprising:

mixing 21.0 to 70.0 percent flour, 0.5 to 5.0 percent leavening agent, 0.1 to 10 percent enzyme, 0.5 to 5 percent emulsifier, 0.2 to 15.0 percent solid fat at room temperature, 0.4 to 20.0 percent liquid oil at room temperature, 0.5 to 5 percent hydrocolloid, 0.5 to 10.0 percent insoluble fiber, 0.5 to 10.0 percent polyol, water, sugar, and salt, to provide a dough component having a water activity of 0.6 to 0.9 and to provide a baked dough having a density of 0.1 to 0.55 g/cm3 (g/cc);

mixing 10.0 to 95.0 percent flavor component, 5 to 10.0 percent polyol, 0.5 to 15.0 percent hydrocolloid, 0.5 to 6.0 percent emulsifier, 2.0 to 25.0 percent solid fat at room temperature, 2.0 to 20.0 percent liquid oil at room temperature, 0.5 to 15.0 percent soluble fiber, and sugar, to provide a filling component having a water activity of 0.4 to 0.9;

enrobing the filling component with the dough component to provide an uncooked filled dough product with the dough component being adjacent to and interfacing with the filling component, the dough component having a different texture from the texture of the filling component;
the ratio of the water activities of the dough component to the filling component in the uncooked filled dough product being 0.7:0.9 to 0.5:0.8;
the uncooked filled dough product comprising 65 to 85 percent dough component;
the filling component comprising 20 to 40 percent uncooked filled dough product;

and baking the uncooked filled dough product to provide a baked filled dough product;

the dough component and the filling component being in amounts and having water activities which are effective for providing, after baking, a baked filled food product with a water activity of 0.5 to 0.8 after storage at room temperature for two weeks in hermetically sealed film packaging; and

the baked filled food product having a shelf life of at least six months when stored at 21°C (70°F) in hermetically sealed film packaging.

By another approach, a method is provided where the dough is baked prior to being filled with the filling, but the water activity of the filling is very close to the water activity of the baked dough and little moisture migration between the two occurs over time. The filled food product produced by the method in this aspect is similar to the filled food product described above where the difference between the water activities of the component is not more than about 0.1. The method for making a filled food product in this aspect includes mixing dough ingredients, such as flour, leavening agent, enzyme, emulsifier, leavening agent, water, solid fat, oil, hydrocolloid, insoluble fiber, polyol, sugar, and salt, in amounts effective to provide a dough component having a water activity of from about 0.7 to about 0.9. The dough component then is baked for a time and at a temperature effective for providing a baked dough component with a water activity of from 0.5 to about 0.8. In an important aspect, the density of the baked dough component is from about 0.1g/cc to about 0.6g/cc, in another aspect from about 0.1 to about 0.5g/cc, and in another aspect from about 0.2 to about 0.5 g/cc. A filling component is made by mixing filling ingredients, such as flavor component, polyol, sugar, hydrocolloid, emulsifier, solid fat, liquid oil, and soluble fiber, in amounts effective to provide a filling component having a water activity of from about 0.5 to about 0.8. The baked dough component is then filled with the filling component to provide the filled food product where the difference between the water activities of the baked dough component and the filling component is less than about 0.1. The baked dough component has a different texture from the texture of the filling component and the ratio of the water activities of the baked dough component to the filling component in the filled food product ranges from about 0.7:0.6 to about 0.8:0.9. In this aspect, the method produces a filled food product comprising about 60 to about 80 percent baked dough component and about 20 to about 40 percent filling. In one aspect, the water activities of the baked dough component and filling component are effective for providing the filled food product with a water activity of from about 0.5 to 0.8 after storage at room temperature for two weeks in hermetically sealed film packaging. In another aspect, the baked dough component and the filling component in the filled food product are in amounts and have water activities effective for maintaining a difference between the water activity of the baked dough component and the water activity of the filling component of less than about 0.1. In yet another aspect, the baked food product has a shelf life of at least about six months when stored at about 21°C (about 70° F) in hermetically sealed film packaging.

There is also described a method for making a baked filled dough product having at least two components is provided where the water activity equilibrates in the product after baking. The method includes mixing dough ingredients, such as flour, leavening agent, enzyme, emulsifier, leavening agent, water, solid fat, oil, hydrocolloid, insoluble fiber, polyol, sugar, and salt,, in amounts effective to provide a
dough component having a water activity of from about 0.6 to about 0.9 and in amounts effective for providing a baked dough having a density of about 0.1g/cc to about 0.6g/cc, or from about 0.1 to about 0.5g/cc, or from about 0.2 to about 0.5 g/cc. The filling can be made by mixing filling ingredients, such as flavor component, polyol, sugar, hydrocolloid, emulsifier, solid fat, liquid oil, and soluble fiber, in amounts effective to provide the filling component having a water activity of from about 0.4 to about 0.9. Thereafter, the filling is combined with the dough component to provide an uncooked filled dough product with the dough component being adjacent to and interfacing with the filling component. In one method, the filling component is encased by the dough component. In another method, the filling component is partially encased by the dough component such that at least a portion of the filling component is exposed. The dough component has a different texture than the texture of the filling component. In one method, the ratio of the water activities of the dough component to the filling component in the uncooked filled dough product is from about 0.7:0.9 to about 0.5:0.8 with the uncooked filled dough product comprising from about 65 to about 85 weight percent dough component and the filling component comprising from about 20 to about 40 weight percent uncooked filled dough product. Thereafter, the uncooked filled dough product is baked to provide a baked filled dough product. The dough component and the filling component are in amounts and have water activities which are effective for providing a baked filled food product with a water activity of from about 0.5 to 0.8 after storage at room temperature for two weeks at room temperature in hermetically sealed film packaging. The resulting baked food product has a shelf life of at least about six months when stored at about 21°C (about 70° F) in film packaging.

By another approach, alcohol can be added to the baked dough component of the baked, filled food product. The alcohol can include, for example, ethanol. The alcohol can be added at about 0.5 to ab out 1.0 percent by weight, in another aspect about 0.5 to about 0.9 percent, of the baked, filled food product. It was surprisingly found that addition of alcohol, such as by adding drops to, spraying, or misting the baked dough component can maintain and prolong the soft texture of the baked dough component during shelf life. While not wishing to be limited by theory, it is believed that the alcohol is distributed in the baked dough component by capillary action.

## BRIEF DESCRIPTION OF THE DRAWINGS

FIG. 1 is a flowchart that illustrates general steps in a method for making a shelf-stable, savory, filled food product, the method including preparing and baking a dough component prior to adding filling component as described herein.

FIG. 2 is a flowchart that illustrates general steps in a method for making a shelf-stable, savory, filled food product, the method including preparing a filled dough component prior to baking as described herein.

## DETAILED DESCRIPTION

Shelf-stable, savory, filled food products and methods for making the shelf-stable, savory, filled food products are provided herein. The savory, filled food products include at least two components having different textures, such as a baked dough component with a bread texture and a filling component with a creamy texture. The filled savory food products have an intermediate water activity (e.g., about 0.5 to about 0.8), which promotes increased shelf life at room temperature. The filled food products have a shelf life of at least about six months when stored at 21°C (70° F) in hermetically sealed film packaging. The food products provided herein retain the respective textures of the components throughout the long shelf life. For purposes herein, the term "shelf-stable" and reference to "shelf life of at least about six months" mean that the filled food product has an aerobic plate count (APC) of less than about 200 CFU/g, yeast at levels less than about 10 CFU/ g, mold at levels less than about 10 CFU/ g, and coliforms at less than 3 MPN/ g for at least six months when stored at 21°C (70° F) in hermetically sealed film of biaxially oriented polypropylene/polyester-polyethylene terephthalate-metallized/polypropylene-BOPP/polyester-polyethylene terephthalate-metallized having a maximum $CO_2$ transmission rate of 0.1 cc/100in$^2$/atm/d and a maximum water vapor transmission rate of 0.03 g/100in$^2$/d.

In one aspect, the dough formulation described herein advantageously can substantially delay or reduce starch retrogradation. By reducing starch retrogradation, staling of the baked dough component of the filled product is delayed, which at least partially permits the soft texture of the baked dough component to be maintained throughout the shelf life of the product. In another aspect, the filling formulation described herein advantageously is bake stable with little or no boil-out during baking of the filled dough product. Further, in another aspect, the baked filled food compositions are savory and have less than about 30 weight percent sugar based upon the weight of the baked food product, in another aspect less than about 20 weight percent sugar, and in yet another aspect less than about 15 weight percent sugar. As used herein, "sugar" means crystalline carbohydrate sweeteners, such as sucrose, lactose, fructose, glucose, and the like.

Water activity is a well known method for characterizing the presence of water. Water activity is measured as the ratio between the vapor pressure of water in an enclosed chamber containing a food and the saturation vapor pressure of water at the temperature. Water activity indicates the degree to which water is bound and, subsequently, available to act as a solvent or participate in destructive chemical and microbiological reactions. When the water activity is low, water is unavailable because it is tightly bound to surface polar sites through chemisorption. Water activity is defined as:

$$a_w = \frac{p}{P_0}$$

where aw is water activity, p is the partial pressure of water above the sample, and $P_0$ is the vapor pressure of pure water at the same temperature (must be specified). Another definition of water activity which is more thermodynamically appropriate is

$$a_w = \frac{P_{eq}}{P_0}$$

where $P_{eq}$ is the partial vapor pressure of water in equilibrium with the solution and $P_0$ is the vapor pressure of pure water at the same temperature and pressure as the solution. When a solute is added to water, water molecules are displaced by solute molecule, and the ratio of the vapor pressures or $a_w$ is altered. Entropy is also lowered as solute molecules become oriented to water molecules. As a result, water molecules are not as free to escape from the liquid phase and the vapor pressure is therefore decreased. This change is governed by Raoult's law, which states that the decrease in vapor pressure of a solution is equal to the mole fraction of its solute. Similarly the ratio of vapor pressures (aw) is governed by the number of moles of solute ($n_1$) and solvent ($n_2$):

$$a_w = \frac{P}{P_0} = \frac{n_1}{n_1 + n_2}$$

Different solutes tie up or bind water to varying degrees depending on the nature of the solute, such as its level of dissociation, extent and nature of intramolecular binding, solubility and chemical components.

An exemplary recipe for the dough and filling for the shelf-stable, filled food product described herein is provided in Table 1 below.

| TABLE 1 | |
|---|---|
| **DOUGH INGREDIENTS** | **RANGE (based on the weight of the dough)** |
| Flour | 21.0-70.0 |
| Enzymes | 0.1-10.0 |
| Emulsifiers | 0.5-5.0 |
| Leavening agent | 0.5-5.0 |
| Water | 10.0-50.0 |
| Solid fat (solid at room temperature) | 0.2-15.0 |
| Oil (liquid at room temperature) | 0.4-20.0 |
| Hydrocolloid | 0.5-5.0 |
| Insoluble fiber | 0.5-10.0 |
| Polyol (e.g., glycerin) | 0.5-10.0 |
| Flavors / Seasonings | 0-10.0 |
| Sugar | 2-10.0 |
| Salt | 0.05-2.0 |
| | |
| **FILLING INGREDIENTS** | **RANGE (based on the weight of the filling)** |
| Flavor component | 10.0-95.0 |
| Polyol (e.g., glycerin) | 0.5-10.0 |
| Sugar | 0.5-16.0 |
| Hydrocolloid | 0.5-15.0 |
| Emulsifier | 0.5-6.0 |
| Fat (solid at room temperature) | 2.0-25.0 |
| Oil (liquid at room temperature) | 2.0-20.0 |
| Salt | 0.05-2.0 |
| Antimicrobial | 0.1-2.0 |
| Soluble fiber | 0.5-15.0 |

(continued)

| FILLING INGREDIENTS | RANGE (based on the weight of the filling) |
|---|---|
| Citric acid | 0.05-2.0 |

The dough ingredients are selected to provide a water activity to the dough of about 0.7 to about 0.9 prior to baking. In one aspect, the baked dough component prepared from the dough has the consistency of bread and has a density of about 0.1 g/cc to about 0.6 g/cc, in another aspect from about 0.1 to about 0.5 g/cc, and in another aspect a density of about 0.2 to 0.5 g/cc. The dough ingredients are also selected to provide an elastic dough. A dough is considered to have elasticity if, when pinching and pulling a portion of the dough, the dough stretches and forms strings. The elasticity of the dough is provided by gluten development. The dough products described herein are different from other types of baked products that are prepared from batters (such as cake batters to provide a cake) that have no gluten development.

The filling ingredients can be selected to provide a water activity of about 0.4 to about 0.9 if the filling will be baked with the dough component, or about 0.5 to about 0.8 if the filling is added to an already baked dough component. It is preferable that the ingredients are selected to have a soft, creamy texture.

Exemplary of the flour component which may be used, for example, are bread flour, whole grain, refined wheat flour, potato flour, and combinations thereof. Hard or soft wheat flours, red or white wheat flours, winter or spring, and blends thereof, all purpose flours, graham flour, and so forth may be used. The flour may be bleached or unbleached. Wheat flour or mixtures of wheat flour with other grains may be used. The flour preferably includes a combination of bread flour, whole grain flour and potato flour. For example, about 15 to about 45 percent bread flour, about 3.0 to about 15.0 percent potato flour, and about 3.0 to about 20.0 percent whole grain flour can be used.

In one aspect, the flour or flours included are selected to provide about 4 to about 20 percent protein in the dough. The proteins can include any food protein, such as for example, soy protein, milk protein, and bread protein, such as gluten. In another aspect, the flour or flours can be selected to provide about 8 to about 15 percent gluten in the dough, in another aspect about 10 to about 13 percent gluten. In one aspect, high gluten flours can be used. In another aspect, gluten can be added separately, if desired, to bring the total amount of gluten in the dough to about 8 to about 15 percent and, in another aspect about 10 to about 13 percent gluten. For example, vital wheat gluten or other gluten sources can be included to increase the gluten content of the dough.

Exemplary oils and fats include vegetable oils, shortening, hydrogenated oil, butter, and the like. Suitable vegetable oils include but are not limited to palm, corn, canola, sunflower seed, cottonseed and soybean oils, or mixtures. The oil may have a flavoring agent, if desired, such as a butter flavoring agent. Alternatively, if desired, a butter flavoring agent or other flavoring agent may be included. The oils may also be provided with preservatives, if desired. Fat substitutes may also be used, if desired. By one approach, the dough and/or filling can be prepared with a combination of solid fat, such as butter, palm fat, or other fat that is solid at room temperature, and oil that is liquid at room temperature. It was found liquid oil can be included to at least partially replace water content of the dough and/or filling, thus allowing for reduction of the water activity of the dough and/or filling.

In one aspect, the dough includes fat chips. When fat chips are included, the fat chips are preferably added towards the end of the dough mixing process to prevent substantially breaking and reducing the size of the fat chips. The dough product of the above formulation provides a flakier texture with a layered structure similar to that of laminated dough products but without the time and expense involved with lamination. It is believed that the layered texture of the bread products described herein is attributable, at least in part, to the inclusion of fat chips (i.e., shortening flakes). The solid fat content of the fat flakes affects how easily the flakes are damaged during mixing (e.g., lose their "flake" shape, melt, break up, disintegrate, or the like). Generally, fat flakes having lower solid fat content are more delicate and require lower mixing speeds, shorter mixing times, and/or lower dough temperatures during mixing to reduce damage to and/or melting of the fat flakes. Therefore, the mixing speed, the mixing time, and/or dough temperature during mixing should be selected in view of the solid fat content of the fat flakes and the starting size of the fat flakes and in view of the target size of the fat flakes after mixing and before baking. When the individual fat flakes melt during baking, the flakes melt slowly to provide localized areas of melted fat which is absorbed into adjacent dough; it is thought that this localized absorbed melted fat helps form the laminated type structure by preventing the dough on either side of the flat dimension of the fat flake from adhering to each other. This results in a desirable layered structure of melted fat and dough which provides the flaky texture upon baking.

Exemplary leavening agents include yeast (e.g., dried yeast, compressed yeast), chemical leavening agent (e.g., sodium bicarbonate, ammonium bicarbonate, calcium bicarbonate), leavening acid (e.g., sodium aluminum phosphate, monocalcium phosphate anhydrous or monohydrate, sodium acid pyrophosphate, sodium aluminum sulfate, monopotassium tartrate, dicalcium phosphate dihydrate, glucono-$\delta$-lactone, calcium phosphate monobasic), mixtures thereof, and the like. Other organics acids suitable for baking may also be used, such as fumaric acid, lactic acid, tartaric acid, malic acid, citric acid, and the like. Because yeast and/or other leavening agents are included in the formulation of the dough, a fermentation or rising step is included in the dough preparation. The fermentation step allows the yeast to produce carbon dioxide gas which stretches and mellows the gluten contained in the flour and aids in producing good flavor and texture.

Enzymes can be included in the dough to assist in retarding staling of the product. Suitable enzymes include starch degrading enzymes, for example, amylase, xylanase, and combinations thereof, as well as dough conditioning enzymes, such as dehydrogenases and proteases. While inclusion of enzymes can contribute to extended shelf life of the product, enzymes have conventionally been known to only extend the shelf life of products for a number of days.

Suitable emulsifiers include, but are not limited to, sodium stearoyl lactylate (SSL), diacetyl tartaric acid ester of monoglyceride (DATEM), lecithin, and combinations thereof.

Both insoluble and soluble fibers are used. For example, the soluble fiber may include, for example, inulin, fructooligosaccharides, and combinations thereof. Resistant maltodextrin, such as the commercially available FIBERSOL® product from B&D Nutritional Ingredients, Inc. (Vista, CA), is a preferred soluble fiber for inclusion in the filling. Inclusion of soluble fiber in the filling can contribute to the creamy texture of the filling. In another aspect, the insoluble fiber may include, for example, soy fiber, oat fiber, apple fiber, and combinations thereof. In a preferred aspect, the insoluble fiber used in the dough includes soy fiber, such as FIBRIM® 1270 by Solae, LLC (St. Louis, MO).

Hydrocolloids are included. For purposes of this disclosure, gums, such as, for example, pectin, sodium alginate, methylcellulose, guar gum, and xanthan gum are treated as hydrocolloids and are not considered "fiber" or "soluble fibers." Accordingly, when the disclosure refers to the term "fiber" or "soluble fiber," hydrocolloids are specifically excluded. In one aspect, the filling includes a hydrocolloid that also functions as a non-sweet humectant, such as fruit paste substitute. A preferred hydrocolloid for the filling is a fruit paste substitute sold as PECTOSE PASTE™, which includes fructose, corn syrup solids, water, pectin, and natural flavors, but does not provide high sweetness to the filling. Fruit paste substitute can also be used in the dough component. It is preferred to include at least one hydrocolloid in the filling because it was found that hydrocolloids contributed to bake stability of the filling.

Polyhydric alcohols (i.e., polyols) are included in the dough and filling. Suitable polyhydric alcohols include, for example, glycerol (or glycerin), sugar alcohols of the general formula $CH_2OH(CHOH)_nCH_2OH$ where n is 2 to 5, propylene glycol, as well as mixtures thereof. Glycerin is the preferred polyhydric alcohol for use herein.

The dough and filling formulations may also contain conventional ingredients normally used in the baking art to provide flavoring, coloring, texturizing, and the like so long as they do not adversely and significantly affect the shelf life or organoleptic properties of the resulting baked product. The dough component can contain, for example, herbs and spices, fruits, vegetables, flavor and/ or aroma ingredients, and combinations thereof.

Antimicrobials can also be included, if desired. Suitable antimicrobials include, for example, calcium proprionate, sodium proprionate, potassium sorbate, sorbic acid, lactic acid, nisin, natamycin, sodium benzoate, benzoic acid, and the like. Preferred antimicrobials include calcium proprionate and sorbic acid. By one approach, the dough and/or filling can include one or more antimicrobials. By another approach, the baked dough component can be sprayed or coated with an antimicrobial.

The composition of the filling component can vary depending on the desired end product. The filling further comprises a flavor component, including, for example, vegetable powder or paste, meat powder or paste, cheese powder or paste, processed cheese product, micromilled cheese product, and combinations thereof. The flavor component is provided in amounts effective to provide the desired savory flavor to the filling. By one approach, the flavor component includes a tomato-based powder or paste to provide a pizza flavor to the filling. By another approach, the flavor component includes a cheese powder, processed cheese, micromilled cheese, cheese paste, or the like to provide a cheesy flavor to the filling. The cheese powder or paste ingredients can be prepared from any cheese type, including, for example, process cheese, natural or artificial cheese. Exemplary cheese powders include commercially available cheese powders prepared from natural or process cheeses. Such cheese powders generally have a low moisture content (generally less than about three percent). The cheese powder may be any flavor cheese, such as cheddar cheese, Swiss cheese, American cheese, provolone cheese, mozzarella cheese, Parmesan cheese, blue cheese, Monterey Jack cheese, Romano cheese, cream cheese, Havarti cheese, Gouda cheese, Muenster cheese, Asiago cheese, Gorgonzola cheese, or a combination thereof. In one aspect, the cheese powder has a water activity of less than about 0.4. In another aspect, the cheese powder has a water activity of less than about 0.3. Commercially-available cheese flavors which can be used herein include, for but are not limited to, Cheezkake Blend, Cheeztang NCS, Chedasharp 501 Uncolored, Sequoia II Colored, MozzarellaZing, ParmZing, Sequoia 2 Uncolored, Cream Cheeztang, and combinations thereof, which are sold by Kraft Food Ingredients (Memphis, TN). The particular flavor or combinations or flavors can be selected to provide the desired flavor profile to the filling.

By one approach, the filling component may also include reduced water activity meat, vegetable, meat analog, fruit, and combinations thereof, preferably having a water activity of less than about 0.6, preferably about 0.4 to about 0.55, are particularly useful. Exemplary meat analog products include, but are not limited to, those made from soy, legumes, rice, wheat gluten, textured vegetable protein, and the like. The filling may also include additives such as preservatives, flavors, colorants, or the like, if desired, so long as the additives do not affect the organoleptic properties or shelf stability of the filling. By one approach, the water activity of the reduced water activity meat, vegetable, meat analog, fruit, and combinations thereof equilibrate with the filling and baked dough component during storage at 21°C (70°F) in hermetically sealed film packaging.

The meat component can be prepared from a variety of types of meat. For example, the particulate component can be prepared from bacon, pepperoni, ham, turkey, sausage, chicken, beef, pork, and the like. As is well known, meat products are prone to oxidative rancidity. To provide shelf-stability, the meat should have low water activity (i.e., a water activity of less than about 0.6). Low water activity also provides the necessary dryness for grinding the meat to the desired size. Meat products having an $a_w$ of less than 0.6, such as about 0.2 to about 0.6 in one aspect, about 0.40 to about 0.55 in another aspect, are particularly suitable for use herein to assist in retarding oxidative rancidity. Meat having an $a_w$ of less than about 0.2 may be used, such as freeze dried meat products, but these meats tend to have increased rates of oxidative rancidity. These meats can be used if more rigorous packaging methods are used, including vacuum packing with nitrogen in packages which allow for little to no oxygen transmission. In general, the fat content of the meat also contributes to the shelf life of the meat product. For example, using lean meats (e.g., meats having a fat content less than about 10 percent) will also tend to extend the shelf life of the meat. Meats having a fat content of about 5 to about 40 can be used herein, with meats having a fat content less than about 25 weight percent are generally preferred from a shelf stability standpoint, with a fat content of less than about 20 percent being particularly preferred. However, meats having a fat content greater than 25 percent may also be used, if desired, so long as the level of fat in the meat does not adversely affect the shelf stability of the product.

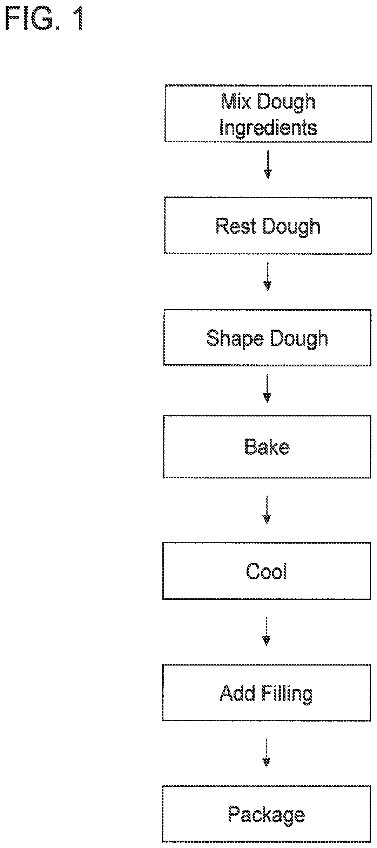

By one exemplary approach and as shown in FIG. 1, the shelf-stable, filled food product can be prepared by preparing a baked dough prior to filling the baked dough with the filling component. The dough ingredients can be mixed using conventional equipment. After mixing, the dough can be allowed to rest at ambient temperature for about 30 to about 120 minutes, in another aspect for about 30 to about 60 minutes. The rested dough can then be shaped into the desired dough shape prior to baking. The dough is baked and then cooled to room temperature. The filling is prepared separately and combined with the baked dough, such as by injection although other techniques can be used, if desired. The baked, filled food product can then be packaged, such as by using conventional packaging techniques.

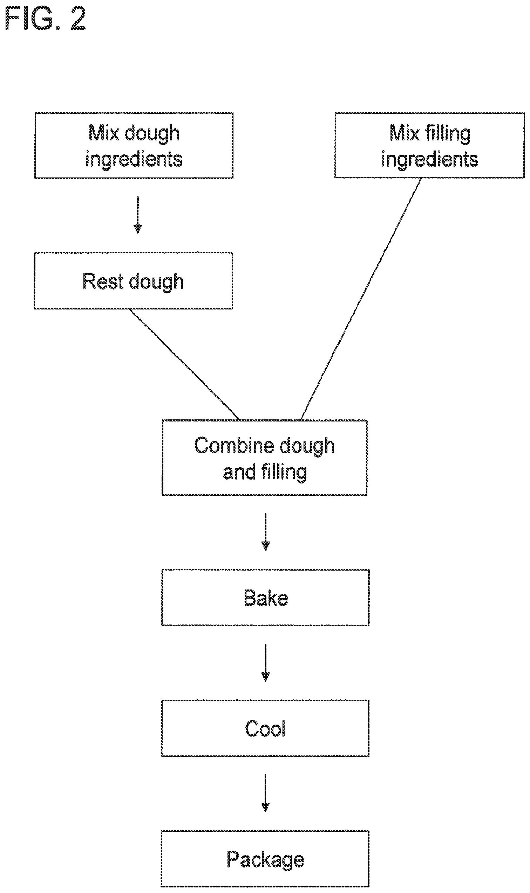

By another exemplary approach and as shown in FIG. 2, the shelf-stable, filled food product can be prepared by preparing a dough, filling the dough with a filling component, and then baking the filled dough. The dough ingredients are mixed to form a dough, which is then rested at ambient temperature for about 30 to about 120 minutes, in another aspect for about 30 to about 60 minutes. The dough is then shaped. The filling ingredients are mixed. The dough and filling are then combined to provide a filled dough product. The dough and filling can be combined using a variety of techniques. By one approach, the dough and filling can be coextruded. The extruded product can then be cut to the desired shape and size. By another approach, the dough can be dual sheeted, the filling applied to the sheeted dough, and the filled dough cut to the desired shape and sized. By yet another approach, the dough can be sheeted, filling applied to the sheeted dough, folding the dough to encase or partially encase the filling, and cutting the product to the desired size and shape. The filled dough can then be baked, although the cooking time and temperature will vary depending on the size of the filled product. For example, an about 26 to about 33 gram filled product containing about 33 percent by weight filling can be baked at a temperature of about 190 to about 204°C (about 375 to about 400°F) for about 8 to about 10 minutes to provide the baked, filled product. The filled product can then be cooled to about room temperature and packaged, such as by using conventional packaging techniques.

By another approach, alcohol can be added in a post-bake step to the baked dough component of the filled product. The alcohol can include, for example, ethanol. The alcohol can be provided as a component of a flavor ingredient or can be provided separately. The alcohol can be added at about 0.5 to about 1.0 percent by weight, in another aspect about 0.5 to about 0.9 percent, of the baked, filled food product. It was surprisingly found that addition of alcohol, such as by adding drops, spraying, or misting the baked dough component can maintain and prolong the soft texture of the baked dough component during shelf life. While not wishing to be limited by theory, it is believed that the alcohol is distributed in the baked product by capillary action and that the alcohol may play a role in reducing or delaying starch retrogradation.

The baked, filled food product can be packaged in a pouch, tray, envelope, or the like. By one approach, the filled food product is individually wrapped in a package formed of plastic film, metal foil, or laminates containing one or more of these materials. The materials employed for the packages may include oxygen-impermeable barriers and/ or water barriers, if desired. Advantageously, the filled food product does not have to be packaged using aseptic conditions, although aseptic conditions can be used, if desired. The baked, filled food product has a shelf life of at least about six months when stored at about 21°C (about 70° F) in hermetically sealed film packaging

By one optional approach, the baked, filled food product can include a baked dough component to provide a further barrier to water and/or fat migration between the filling and baked component. This can be accomplished by either increasing the hydrocolloid content of the dough component (such as including methylcellulose in the range of about 0.6 to 20 percent weight) or through the use of pre-treated dough (such as by steam treatment), or other pre-process ingredients, such as, for example, pre-gelatinized starches or denatured proteins. However, the filled food product described herein should not include a film disposed between the dough and filling component that is provided other than by a steam-treated, baked dough component.

The following examples are intended to illustrate the shelf-stable, filled food products and methods provided herein and not to limit or otherwise restrict the disclosure. Unless indicated otherwise, all parts, ratios, and all percentages are based on weight.

EXAMPLES

Example 1.

A dough in accordance with the disclosure can be prepared according to the recipe presented in Table 2 below.

| TABLE 2 | | |
|---|---|---|
| PRE-BAKE DOUGH INGREDIENTS | PERCENT WEIGHT | WEIGHT PERCENT RANGE |
| GROUP 1 | | |
| Bread flour | 42.0 | 5.0-65.0 |
| Yeast (mixed with water) | 1.0 | 0.05-3.0 |
| Sodium stearoyl iacty!ate (SSL) | 0.2 | 0.05-5.0 |
| Dough salt | 0.7 | 0.05-2.0 |
| Calcium propionate | 0.3 | 0.1-2.0 |
| DATEM | 0.3 | 0.05-5.0 |
| Methylcellulose | 0.3 | 0.05-5.0 |
| Starch degrading enzyme | 0.2 | 0.01-10.0 |
| Guar gum | 0.3 | 0.05-5.0 |
| Sugar | 4.0 | 2.0-10.0 |
| Xylanase | 0.03 | 0.03-1.0 |
| Other dough conditioner/stabilizer | 0.15 | 0.05-5.0 |
| Leavening agent | 1.0 | 0.1-2.0 |
| Whole grain flour | 14.0 | 5.0-65.0 |
| Flavoring or seasoning | 0.02 | 0.0-10.0 |
| | | |
| GROUP 2 | | |
| Water | 27.22 | 10.0-50.0 |
| Oil | 6.0 | 2.0-20,0 |
| Glycerin | 0.5 | 0.05-5.0 |
| Fat | 1.5 | 0.4-10.0 |
| Lecithin | 0.28 | 0.5-10.0 |
| TOTAL | 100 | |

The Group 1 and Group 2 ingredients are separately mixed and then combined and mixed.

Example 2.

A filling composition having a water activity of about 0.4 to about 0.9 can be prepared according to the recipe presented in Table 3 below.

| TABLE 3 | | |
|---|---|---|
| INGREDIENTS | PERCENT BY WEIGHT | WEIGHT PERCENT RANGE |
| Cheese and/or cheese product component | 86.65 | 10-95 |
| Glycerin | 7.5 | 0.5-10 |
| Lactose | 2.5 | 0.5-15 |
| Methylcellulose | 1 | 0.05-5 |
| Lecithin | 0.5 | 0.1-2 |
| Salt | 0.2 | 0.1-2 |
| Sodium alginate | 1 | 0.05-5 |
| Lactic acid | 0.15 | 0.1-1 |
| Other fermented antimicrobial | 0.5 | 0.1-2 |
| TOTAL | 100 | |

Example 3.

A dough in accordance with the disclosure can be prepared from the ingredients in Table 4 below. The Group 1 ingredients are dry blended prior to addition of water. The Group 3 ingredients are separately mixed and then combined with the mixed Group 1 and 2 ingredients. Finally, the fat chips of Group 4 are added.

| TABLE 4 | | | |
|---|---|---|---|
| INGREDIENTS | BAKER'S PERCENT | PERCENT OF DOUGH | WEIGHT PERCENT RANGE |
| | | | |
| **GROUP 1** | | | |
| Bread flour | 100.0 | 29.93 | 15.0-45.0 |
| Potato flour | 15.28 | 4.57 | 3.0-15.0 |
| Whole grain flour | 38.89 | 11.64 | 3.0-20.0 |
| Calcium proprionate | 0.52 | 0.16 | 0.05-2.0 |
| Sorbic acid | 0.19 | 0.19 | 0.05-20 |
| DATEM | 0.79 | 0.24 | 0.05-5 |
| Starch degrading enzymes & emulsifiers (blend from manufacturers) | 10.81 | 3.23 | 0.05-10.0 |
| Instant dry yeast | 2.40 | 0.72 | 0.05-3.0 |
| | | | |
| **GROUP 2** | | | |
| Water (~50°F) | 93.66 | 28.03 | 10.0-50.0 |
| | | | |
| **GROUP 3** | | | |
| Butter | 2.11 | 0.63 | 0.2-15.0 |
| RBD soybean oil | 23.34 | 6.98 | 0.4-20.0 |
| Glycerin | 6.26 | 1.87 | 0.05-10.0 |
| Lecithin | 3.01 | 0.90 | 0.5-5.0 |

(continued)

| TABLE 4 | | | |
|---|---|---|---|
| **INGREDIENTS** | **BAKER'S PERCENT** | **PERCENT OF DOUGH** | **WEIGHT PERCENT RANGE** |
| Flavor or seasoning | 0.12 | 0.04 | 0.0-10.0 |
| **PRE-BLEND THEN ADD**: | | | |
| Sugar | 15.56 | 4.66 | 2.0-10.0 |
| Salt | 1.59 | 0.48 | 0.05-2.0 |
| Leavening agent | 1.67 | 0.50 | 0.1-2.0 |
| Methylcellulose | 0.79 | 0.24 | 0.05-5.0 |
| Xanthan gum | 0.79 | 0.24 | 0.05-5.0 |
| Guar gum | 0.79 | 0.24 | 0.05-5.0 |
| Soy fiber | 1.46 | 0.44 | 0.5-10.0 |
| | | | |
| **GROUP 4** | | | |
| Fat chips | 14.45 | 4.32 | 1.0-20.0 |
| **TOTALS:** | 334.10 | 100 | |

Example 4.

A dough in accordance with the disclosure can be prepared from the ingredients in Table 5 below. The Group 1 ingredients are dry blended prior to addition of water. The Group 3 ingredients are separately mixed and then combined with the mixed Group 1 and 2 ingredients. Finally, the fat chips of Group 4 are added.

| TABLE 5 | | | |
|---|---|---|---|
| **PRE-BAKE INGREDIENTS** | **BAKER'S PERCENTAGE** | **PERCENT OF DOUGH** | **WEIGHT PERCENT RANGE** |
| | | | |
| **GROUP 1** | | | |
| Bread flour | 100.0 | 30.34 | 15.0-45.0 |
| High gluten flour | 16.9 | 5.13 | 3.0-15.0 |
| Whole grain flour | 39.4 | 11.96 | 3.0-20.0 |
| Calcium proprionate | 0.53 | 0.16 | 0.05-2.0 |
| Sorbic acid | 0.63 | 0.19 | 0.05-2.0 |
| DATEM | 0.80 | 0.24 | 0.05-5.0 |
| Starch degrading enzymes & emulsifiers (blend from manufacturers) | 12.26 | 3.96 | 0.05-10.0 |
| Instant dry yeast | 2.44 | 0.74 | 0.05-3,0 |
| | | | |
| **GROUP 2** | | | |
| Water (50° F) | 83.71 | 25.39 | 10.0-50.0 |
| | | | |
| **GROUP 3** | | | |

(continued)

| TABLE 5 | | | |
|---|---|---|---|
| PRE-BAKE INGREDIENTS | BAKER'S PERCENTAGE | PERCENT OF DOUGH | WEIGHT PERCENT RANGE |
| Butter | 2.14 | 0.65 | 0.2-15.0 |
| RBD soybean oil | 23.66 | 7.17 | 0.4-20.0 |
| Glycerin | 6.34 | 1.92 | 0.05-10.0 |
| Lecithin | 3.05 | 0.93 | 0.05-5.0 |
| Flavor or seasoning | 0.13 | 0.04 | 0.02-10.0 |
| **PRE-BLEND THEN ADD:** | | | |
| Sugar | 15.78 | 4.79 | 2.0-10.0 |
| Salt | 1.61 | 0.49 | 0.05-2.0 |
| Leavening agent | 1.69 | 0.51 | 0.1-2.0 |
| Methylcellulose | 0.80 | 0.24 | 0.05-5.0 |
| Xanthan gum | 0.80 | 0.24 | 0.05-5.0 |
| Guar gum | 0.80 | 0.24 | 0.05-5.0 |
| Soy fiber | 1.50 | 0.45 | 05-10.0 |
| | | | |
| **GROUP 4** | | | |
| Fat chips | 14.65 | 4.44 | 1.0-20.0 |
| TOTALS: | | 100 | |

Example 5.

A filling in accordance with the disclosure can be prepared from the ingredients in Table 6 bellow. The Group 1 ingredients and Group 2 ingredients can be mixed separately and then combined.

| TABLE 6 | | |
|---|---|---|
| INGREDIENTS | PERCENT OF FILLING | WEIGHT PERCENT RANGE |
| | | |
| **GROUP 1** | | |
| Cheese powder | 35.07 | 10.0-95.0 |
| Salt | 0.32 | 0.5-2.0 |
| Fiber | 4.60 | 0.5-15.0 |
| Lactose | 2.23 | 0.5-16.0 |
| Preservatives | 0.66 | 0.1-2.0 |
| Citric Acid | 0.41 | 0.05-2.0 |
| | | |
| **GROUP 2** | | |
| Palm fat | 8.08 | 2.0-25.0 |
| RBD Soybean oil | 4.87 | 2.0-20.0 |
| Glycerin | 2.55 | 0.5-10.0 |

(continued)

| TABLE 6 | | |
|---|---|---|
| INGREDIENTS | PERCENT OF FILLING | WEIGHT PERCENT RANGE |
| Emulsifiers | 1.59 | 0.5-6.0 |
| Cheezkake Blend (Kraft Food Ingredients) | 3.78 | 1.0-15.0 |
| Flavors | 1.75 | 0.1-3.0 |
| Cheezolate (micromilled processed cheese blend) | 26.55 | 2.0-40.0 |
| Pectin based gel | 7.51 | 0.5-15.0 |
| | | |
| TOTALS: | 100 | |

Example 6.

A filling in accordance with the disclosure can be prepared from the ingredients in Table 7 below. The Group 1 ingredients and Group 2 ingredients can be mixed separately and then combined.

| TABLE 7 | | |
|---|---|---|
| INGREDIENTS | PERCENT OF DOUGH | WEIGHT PERCENT RANGE |
| | | |
| **CROUP 1** | | |
| Cheese and/or cheese product component | 33.53 | 10.0-95.0 |
| Salt | 0.31 | 0.05-2.0 |
| Fiber | 4.40 | 0.5-15.0 |
| Lactose | 2.13 | 0.5-16.0 |
| Other fermented antimicrobial | 0.63 | 0.1-2.0 |
| Citric acid | 0.39 | 0.05-2.0 |
| FIBRIM® 1270 by Solae, LLC (St. Louts, MO) | 1.52 | 0.1-5.0 |
| | | |
| **GROUP 2** | | |
| Palm fat | 7.73 | 2.0-25.0 |
| RBD soybean oil | 4.66 | 2.0-20.0 |
| Glycerin | 2.44 | 0.5-10.0 |
| Emulsifiers | 1.52 | 0.5-6.0 |
| Cheezkake Blend® | 3.61 | 1.0-15.0 |
| Flavors | 1.68 | 0.0-3.0 |
| Cheezolate® | 25.38 | 2.0-40.0 |
| Rosemary green tea extract | 0.05 | 0.1-2.0 |
| Pectin based gel | 10.03 | 0.5-15.0 |
| | | |
| TOTALS: | 100 | |

It will be understood that various changes in the materials and arrangements of formulations and ingredients

EP 2 542 091 B1

described herein may be made by those skilled in the art.


**Claims**

1. A baked food product having at least two components and at least two different textures, the baked food product comprising:

   a baked dough component having a water activity of 0.5 to 0.8, wherein the baked dough component is made from a dough comprising 21.0 to 70.0 percent flour, 0.5 to 5 percent emulsifier, 0.1 to 10 percent enzyme, 0.5 to 5.0 percent leavening agent, 0.2 to 15.0 percent solid fat at room temperature, 0.4 to 20.0 percent liquid oil at room temperature, 0.5 to 5 percent hydrocolloid, 0.5 to 10.0 percent insoluble fiber, and 0.5 to 10.0 percent polyol; and
   a filling component having a water activity of 0.4 to 0.9, wherein the filling component comprises 10.0 to 95.0 percent flavor component, 0.5 to 15.0 percent hydrocolloid, 0.5 to 6.0 percent emulsifier, 0.5 to 10.0 percent polyol, 2.0 to 25.0 percent solid fat at room temperature, 2.0 to 20.0 percent liquid oil at room temperature, and 0.5 to 15.0 percent soluble fiber;
   the baked dough component enrobing the filling component;

   the baked dough component having a different texture from the texture of the filling component;

   the ratio of the water activities of the baked dough component to the filling component being 0.5:0.4 to 0.8:0.9;
   the baked food product having less than 30 percent sugar based upon the weight of the baked food product;
   the baked food product comprising 60 to 80 percent baked dough component and 20 to 40 percent filling component;
   the baked dough component and the filling component being in amounts and having water activities which are effective for providing the baked food product with a water activity of 0.5 to 0.8 after storage at room temperature for two weeks in a hermetically sealed film packaging; and
   the baked food product having a shelf life of at least six months when stored at 21°C (70°F) in hermetically sealed film packaging.

2. An uncooked filled dough product having at least two components, the uncooked filled dough product comprising:

   a dough component having a water activity of 0.7 to 0.9, wherein the uncooked dough component comprises 21.0 to 70.0 percent flour, 0.5 to 5 percent emulsifier, 0.1 to 10 percent enzyme, 0.5 to 5.0 percent leavening agent, 0.2 to 15.0 percent solid fat at room temperature, 0.4 to 20.0 percent liquid oil at room temperature, 0.5 to 5 percent hydrocolloid, 0.5 to 10.0 percent insoluble fiber, and 0.5 to 10.0 percent polyol; and

   a filling component having a water activity of 0.4 to 0.9, wherein the filling component comprises 10.0 to 95.0 percent flavor component, 0.5 to 15.0 percent hydrocolloid, 0.5 to 6.0 percent emulsifier, 0.5 to 10.0 percent polyol, 2.0 to 25.0 percent solid fat at room temperature, 2.0 to 20.0 percent liquid oil at room temperature, and 0.5 to 15.0 percent soluble fiber;

   the dough component enrobing the filling component;
   the dough component having a different texture from the texture of the filling component;
   the uncooked filled dough product having less than 30 percent sugar;
   the ratio of the water activities of the dough component to the filling component being 0.7:0.4 to 0.9:0.9;
   the dough component comprising 65 to 85 percent of the uncooked filled dough product;
   the filling component comprising 20 to 40 percent of the uncooked filled dough product;
   the dough component and the filling component being in amounts and having water activities which are effective for providing, after baking, a baked food product with a water activity of 0.5 to 0.8 after storage at room temperature for two weeks in film packaging; and
   the baked food product having a shelf life of at least six months when stored at 21°C (70°F) in film packaging.

3. A product as claimed in claim 1 or claim 2, wherein the baked dough component is adjacent to and interfaces with the filling component, and the baked dough component has a density of 0.1 to 0.5 g/cm3 (g/cc).

4. A product as claimed in any one of claims 1 to 3, wherein the dough component includes flour having protein in an

16

amount to provide 8 to 15 percent gluten in the dough.

5. A method for making a baked filled dough product having at least two components, the method comprising:

mixing 21.0 to 70.0 percent flour, 0.5 to 5.0 percent leavening agent, 0.1 to 10 percent enzyme, 0.5 to 5 percent emulsifier, 0.2 to 15.0 percent solid fat at room temperature, 0.4 to 20.0 percent liquid oil at room temperature, 0.5 to 5 percent hydrocolloid, 0.5 to 10.0 percent insoluble fiber, 0.5 to 10.0 percent polyol, water, sugar, and salt, to provide a dough component having a water activity of 0.6 to 0.9 and to provide a baked dough having a density of 0.1 to 0.55 g/cm3 (g/cc);

mixing 10.0 to 95.0 percent flavor component, 5 to 10.0 percent polyol, 0.5 to 15.0 percent hydrocolloid, 0.5 to 6.0 percent emulsifier, 2.0 to 25.0 percent solid fat at room temperature, 2.0 to 20.0 percent liquid oil at room temperature, 0.5 to 15.0 percent soluble fiber, and sugar, to provide a filling component having a water activity of 0.4 to 0.9;

enrobing the filling component with the dough component to provide an uncooked filled dough product with the dough component being adjacent to and interfacing with the filling component, the dough component having a different texture from the texture of the filling component;

the ratio of the water activities of the dough component to the filling component in the uncooked filled dough product being 0.7:0.9 to 0.5:0.8;

the uncooked filled dough product comprising 65 to 85 percent dough component;

the filling component comprising 20 to 40 percent uncooked filled dough product;

and baking the uncooked filled dough product to provide a baked filled dough product;

the dough component and the filling component being in amounts and having water activities which are effective for providing, after baking, a baked filled food product with a water activity of 0.5 to 0.8 after storage at room temperature for two weeks in hermetically sealed film packaging; and

the baked filled food product having a shelf life of at least six months when stored at 21 °C (70°F) in hermetically sealed film packaging.

6. A method for making a filled food product having at least two components, the method comprising:

mixing 21.0 to 70.0 percent flour, 0.5 to 5.0 percent leavening agent, 0.1 to 10 percent enzyme, 0.5 to 5 percent emulsifier, 0.2 to 15.0 percent solid fat at room temperature, 0.4 to 20.0 percent liquid oil at room temperature, 0.5 to 5 percent hydrocolloid, 0.5 to10.0 percent insoluble fiber, 0.5 to 10.0 percent polyol, water, sugar, and salt, to provide a dough component having a water activity of 0.7 to 0.9;

baking the dough component for a time and temperature effective for providing a baked dough component with a water activity of 0.5 to 0.8;

mixing 10.0 to 95.0 percent flavor component, 0.5 to 10.0 percent polyol, 0.5 to 15.0 percent hydrocolloid, 0.5 to 6.0 percent emulsifier, 2.0 to 25.0 percent solid fat at room temperature, 2.0 to 20.0 percent liquid oil at room temperature, 0.5 to 15.0 percent soluble fiber, and sugar, to provide a filling component having a water activity of 0.4 to 0.8;

filling the baked dough component with the filling component to provide the filled product;

the baked dough component having a different texture from the texture of the filling component;

the ratio of the water activities of the baked dough component to the filling component in the filled food product being 0.7:0.8 to 0.8:0.8 when stored after two weeks in hermetically sealed film packaging at room temperature;

the filled food product comprising 60 to 80 percent baked dough component and 20 to 40 percent filling component;

the baked dough component and the filling component being in amounts and having water activities which are effective for providing the filled food product with a water activity of 0.6 to 0.8 after storage at room temperature for two weeks in hermetically sealed film packaging at room temperature;

the filled food product having a shelf life of at least six months when stored at 21°C (70°F) in hermetically sealed film packaging.

7. A method as claimed in claim 5 or claim 6, wherein the amounts and ratios of flour, fiber, water, gum, emulsifier and enzyme effective to provide a baked dough component adjacent to and interfacing with the filling component with a density of 0.1 to 0.5 g/cm3 (g/cc).

8. A method as claimed in any one of claims 5 to 7, wherein the method further comprises adding ethanol to the baked dough component in an amount of 0.5 to 1.0 percent.

9. A method as claimed in any one of claims 5 to 8, wherein the method further comprises steam treating the dough component.

**Patentansprüche**

1. Gebackenes Lebensmittelprodukt, aufweisend mindestens zwei Bestandteile und mindestens zwei verschiedene Texturen, wobei das gebackene Lebensmittelprodukt Folgendes umfasst:

einen gebackenen Teigbestandteil mit einer Wasseraktivität von 0,5 bis 0,8, wobei der gebackene Teigbestandteil aus einem Teig hergestellt ist, der 21,0 bis 70,0 Prozent Mehl, 0,5 bis 5 Prozent Emulgator, 0,1 bis 10 Prozent Enzym, 0,5 bis 5,0 Prozent Treibmittel, 0,2 bis 15,0 Prozent festes Fett bei Raumtemperatur, 0,4 bis 20,0 Prozent flüssiges Öl bei Raumtemperatur, 0,5 bis 5 Prozent Hydrokolloid, 0,5 bis 10,0 Prozent unlösliche Faser und 0,5 bis 10,0 Prozent Polyol umfasst; und
einen Füllungsbestandteil mit einer Wasseraktivität von 0,4 bis 0,9, wobei der Füllungsbestandteil 10,0 bis 95,0 Prozent Aromabestandteil, 0,5 bis 15,0 Prozent Hydrokolloid, 0,5 bis 6,0 Prozent Emulgator, 0,5 bis 10,0 Prozent Polyol, 2,0 bis 25,0 Prozent festes Fett bei Raumtemperatur, 2,0 bis 20,0 Prozent flüssiges Öl bei Raumtemperatur und 0,5 bis 15,0 Prozent lösliche Faser umfasst;
wobei der gebackene Teigbestandteil den Füllungsbestandteil umhüllt;
wobei der gebackene Teigbestandteil eine andere Textur aufweist als die Textur des Füllungsbestandteils;
wobei das Verhältnis der Wasseraktivitäten des gebackenen Teigbestandteils zu dem Füllungsbestandteil 0,5:0,4 bis 0,8:0,9 beträgt;
wobei das gebackene Lebensmittelprodukt weniger als 30 Prozent Zucker, basierend auf dem Gewicht des gebackenen Lebensmittelprodukts, aufweist;
wobei das gebackene Lebensmittelprodukt 60 bis 80 Prozent gebackenen Teigbestandteil und 20 bis 40 Prozent Füllungsbestandteil umfasst;
wobei der gebackene Teigbestandeil und der Füllungsbestandteil in Mengen vorliegen und Wasseraktivitäten aufweisen, die wirksam sind, um das gebackene Lebensmittelprodukt mit einer Wasseraktivität von 0,5 bis 0,8 nach Lagerung bei Raumtemperatur für zwei Wochen in einer hermetisch verschweißten Folienverpackung bereitzustellen; und
wobei das gebackene Lebensmittelprodukt eine Haltbarkeitsdauer von mindestens sechs Monaten aufweist, wenn es bei 21 °C (70 °F) in einer hermetisch verschweißten Folienverpackung gelagert wird.

2. Nicht gebackenes gefülltes Teigprodukt, aufweisend mindestens zwei Bestandteile, wobei das nicht gebackene gefüllte Teigprodukt Folgendes umfasst:

einen Teigbestandteil mit einer Wasseraktivität von 0,7 bis 0,9, wobei der ungekochte Teigbestandteil 21,0 bis 70,0 Prozent Mehl, 0,5 bis 5 Prozent Emulgator, 0,1 bis 10 Prozent Enzym, 0,5 bis 5,0 Prozent Treibmittel, 0,2 bis 15,0 Prozent festes Fett bei Raumtemperatur, 0,4 bis 20,0 Prozent flüssiges Öl bei Raumtemperatur, 0,5 bis 5 Prozent Hydrokolloid, 0,5 bis 10,0 Prozent unlösliche Faser und 0,5 bis 10,0 Prozent Polyol umfasst; und
einen Füllungsbestandteil mit einer Wasseraktivität von 0,4 bis 0,9, wobei der Füllungsbestandteil 10,0 bis 95,0 Prozent Aromabestandteil, 0,5 bis 15,0 Prozent Hydrokolloid, 0,5 bis 6,0 Prozent Emulgator, 0,5 bis 10,0 Prozent Polyol, 2,0 bis 25,0 Prozent festes Fett bei Raumtemperatur, 2,0 bis 20,0 Prozent flüssiges Öl bei Raumtemperatur und 0,5 bis 15,0 Prozent lösliche Faser umfasst;
wobei der Teigbestandteil den Füllungsbestandteil umhüllt;
wobei der Teigbestandteil eine andere Textur aufweist als die Textur des Füllungsbestandteils;
wobei das nicht gebackene gefüllte Teigprodukt weniger als 30 Prozent Zucker aufweist;
wobei das Verhältnis der Wasseraktivitäten des Teigbestandteils zu dem Füllungsbestandteil 0,7:0,4 bis 0,9:0,9 beträgt;
wobei der Teigbestandteil 65 bis 85 Prozent des nicht gebackenen gefüllten Teigprodukts umfasst;
wobei der Füllungsbestandteil 20 bis 40 Prozent des nicht gebackenen gefüllten Teigprodukts umfasst;
wobei der Teigbestandeil und der Füllungsbestandteil in Mengen vorliegen und Wasseraktivitäten aufweisen, die wirksam sind, um nach dem Backen ein gebackenes Lebensmittelprodukt mit einer Wasseraktivität von 0,5 bis 0,8 nach Lagerung bei Raumtemperatur für zwei Wochen in einer Folienverpackung bereitzustellen; und
wobei das gebackene Lebensmittelprodukt eine Haltbarkeitsdauer von mindestens sechs Monaten aufweist, wenn es bei 21 °C (70 °F) in einer Folienverpackung gelagert wird.

3. Produkt nach Anspruch 1 oder Anspruch 2, wobei der gebackene Teigbestandteil an den Füllungsbestandteil angrenzt und eine Grenzfläche damit bildet und der gebackene Teigbestandteil eine Dichte von 0,1 bis 0,5 g/cm3 (g/cc) aufweist.

4. Produkt nach einem der Ansprüche 1 bis 3, wobei der Teigbestandteil Mehl umfasst, das Protein in einer Menge aufweist, um 8 bis 15 Prozent Gluten in dem Teig bereitzustellen.

5. Verfahren zur Herstellung eines gebackenen gefüllten Teigprodukts, das mindestens zwei Bestandteile aufweist, wobei das Verfahren Folgendes umfasst:

Mischen von 21,0 bis 70,0 Prozent Mehl, 0,5 bis 5,0 Prozent Treibmittel, 0,1 bis 10 Prozent Enzym, 0,5 bis 5 Prozent Emulgator, 0,2 bis 15,0 Prozent festem Fett bei Raumtemperatur, 0,4 bis 20,0 Prozent flüssigem Öl bei Raumtemperatur, 0,5 bis 5 Prozent Hydrokolloid, 0,5 bis 10,0 Prozent unlöslicher Faser, 0,5 bis 10,0 Prozent Polyol, Wasser, Zucker und Salz, um einen Teigbestandteil mit einer Wasseraktivität von 0,6 bis 0,9 bereitzustellen und um einen gebackenen Teig mit einer Dichte von 0,1 bis 0,55 g/cm3 (g/cc) bereitzustellen;
Mischen von 10,0 bis 95,0 Prozent Aromabestandteil, 5 bis 10,0 Prozent Polyol, 0,5 bis 15,0 Prozent Hydrokolloid, 0,5 bis 6,0 Prozent Emulgator, 2,0 bis 25,0 Prozent festem Fett bei Raumtemperatur, 2,0 bis 20,0 Prozent flüssigem Öl bei Raumtemperatur, 0,5 bis 15,0 Prozent löslicher Faser und Zucker, um einen Füllungsbestandteil mit einer Wasseraktivität von 0,4 bis 0,9 bereitzustellen;
Umhüllen des Füllungsbestandteils mit dem Teigbestandteil, um ein Nicht gebackenes gefülltes Teigprodukt bereitzustellen, wobei der Teigbestandteil an den Füllungsbestandteil angrenzt und eine Grenzfläche damit bildet, wobei der Teigbestandteil eine andere Textur aufweist als die Textur des Füllungsbestandteils;
wobei das Verhältnis der Wasseraktivitäten des Teigbestandteils zu dem Füllungsbestandteil in dem nicht gebackenen gefüllten Teigprodukt 0,7:0,9 bis 0,5:0,8 beträgt;
wobei das nicht gebackene gefüllte Teigprodukt 65 bis 85 Prozent Teigbestandteil umfasst;
wobei der Füllungsbestandteil 20 bis 40 Prozent des nicht gebackenen gefüllten Teigprodukts umfasst; und
Backen des nicht gebackenen gefüllten Teigprodukts, um ein gebackenes gefülltes Teigprodukt bereitzustellen;
wobei der Teigbestandeil und der Füllungsbestandteil in Mengen vorliegen und Wasseraktivitäten aufweisen, die wirksam sind, um nach dem Backen ein gebackenes gefülltes Lebensmittelprodukt mit einer Wasseraktivität von 0,5 bis 0,8 nach Lagerung bei Raumtemperatur für zwei Wochen in einer hermetisch verschweißten Folienverpackung bereitzustellen; und
wobei das gebackene gefüllte Lebensmittelprodukt eine Haltbarkeitsdauer von mindestens sechs Monaten aufweist, wenn es bei 21 °C (70 °F) in einer hermetisch verschweißten Folienverpackung gelagert wird.

6. Verfahren zur Herstellung eines gefüllten Lebensmittelprodukts, das mindestens zwei Bestandteile aufweist, wobei das Verfahren Folgendes umfasst:

Mischen von 21,0 bis 70,0 Prozent Mehl, 0,5 bis 5,0 Prozent Treibmittel, 0,1 bis 10 Prozent Enzym, 0,5 bis 5 Prozent Emulgator, 0,2 bis 15,0 Prozent festem Fett bei Raumtemperatur, 0,4 bis 20,0 Prozent flüssigem Öl bei Raumtemperatur, 0,5 bis 5 Prozent Hydrokolloid, 0,5 bis 10,0 Prozent unlöslicher Faser, 0,5 bis 10,0 Prozent Polyol, Wasser, Zucker und Salz, um einen Teigbestandteil mit einer Wasseraktivität von 0,7 bis 0,9 bereitzustellen;
Backen des Teigbestandteils für eine Dauer und bei einer Temperatur, die wirksam sind, um einen gebackenen Teigbestandteil mit einer Wasseraktivität von 0,5 bis 0,8 bereitzustellen;
Mischen von 10,0 bis 95,0 Prozent Aromabestandteil, 0,5 bis 10,0 Prozent Polyol, 0,5 bis 15,0 Prozent Hydrokolloid, 0,5 bis 6,0 Prozent Emulgator, 2,0 bis 25,0 Prozent festem Fett bei Raumtemperatur, 2,0 bis 20,0 Prozent flüssigem Öl bei Raumtemperatur, 0,5 bis 15,0 Prozent löslicher Faser und Zucker, um einen Füllungsbestandteil mit einer Wasseraktivität von 0,4 bis 0,8 bereitzustellen;
Füllen des gebackenen Teigbestandteils mit dem Füllungsbestandteil, um das gefüllte Produkt bereitzustellen;
wobei der gebackene Teigbestandteil eine andere Textur aufweist als die Textur des Füllungsbestandteils;
wobei das Verhältnis der Wasseraktivitäten des gebackenen Teigbestandteils zu dem Füllungsbestandteil in dem gefüllten Lebensmittelprodukt 0,7:0,8 bis 0,8:0,8 nach zweiwöchiger Lagerung in einer hermetisch verschweißten Folienverpackung bei Raumtemperatur beträgt;
wobei das gefüllte Lebensmittelprodukt 60 bis 80 Prozent gebackenen Teigbestandteil und 20 bis 40 Prozent Füllungsbestandteil umfasst;
wobei der gebackene Teigbestandeil und der Füllungsbestandteil in Mengen vorliegen und Wasseraktivitäten aufweisen, die wirksam sind, um das gefüllte Lebensmittelprodukt mit einer Wasseraktivität von 0,6 bis 0,8 nach Lagerung bei Raumtemperatur für zwei Wochen in einer hermetisch verschweißten Folienverpackung bei Raumtemperatur bereitzustellen;
wobei das gefüllte Lebensmittelprodukt eine Haltbarkeitsdauer von mindestens sechs Monaten aufweist, wenn es bei 21 °C (70 °F) in einer hermetisch verschweißten Folienverpackung gelagert wird.

7.  Verfahren nach Anspruch 5 oder Anspruch 6, wobei die Mengen und Verhältnisse von Mehl, Faser, Wasser, Gummi, Emulgator und Enzym wirksam ist, um einen gebackenen Teigbestandteil, der an den Füllungsbestandteil angrenzt und eine Grenzfläche damit bildet, mit einer Dichte von 0,1 bis 0,5 g/cm3 (g/cc) bereitzustellen.

8.  Verfahren nach einem der Ansprüche 5 bis 7, wobei das Verfahren ferner das Hinzufügen von Ethanol zu dem gebackenen Teigbestandteil in einer Menge von 0,5 bis 1,0 Prozent umfasst.

9.  Verfahren nach einem der Ansprüche 5 bis 8, wobei das Verfahren ferner das Dampfbehandeln des Teigbestandteils umfasst.

**Revendications**

1.  Produit alimentaire cuit possédant au moins deux composants et au moins deux textures différentes, le produit alimentaire cuit comprenant :

    un composant de pâte cuit possédant une activité de l'eau de 0,5 à 0,8, dans lequel le composant de pâte cuit est fabriqué à partir d'une pâte comprenant 21,0 à 70,0 pour cent de farine, 0,5 à 5 pour cent d'émulsifiant, 0,1 à 10 pour cent d'enzyme, 0,5 à 5,0 pour cent d'agent levant, 0,2 à 15,0 pour cent de matière grasse solide à la température ambiante, 0,4 à 20,0 pour cent d'huile liquide à la température ambiante, 0,5 à 5 pour cent d'hydrocolloïde, 0,5 à 10,0 pour cent de fibre insoluble, et 0,5 à 10,0 pour cent de polyol ; et
    un composant de fourrage ayant une activité de l'eau de 0,4 à 0,9, dans lequel le composant de fourrage comprend 10,0 à 95,0 pour cent de composant d'arôme, 0,5 à 15,0 pour cent d'hydrocolloïde, 0,5 à 6,0 pour cent d'émulsifiant, 0,5 à 10,0 pour cent de polyol, 2,0 à 25,0 pour cent de matière grasse solide à la température ambiante, 2,0 à 20,0 pour cent d'huile liquide à la température ambiante et 0,5 à 15,0 pour cent de fibre soluble ;
    le composant de pâte cuit enrobant le composant de fourrage ;
    le composant de pâte cuit ayant une texture différente de la texture du composant de fourrage ;
    le rapport des activités de l'eau du composant de pâte cuit au composant de fourrage allant de 0,5:0,4 à 0,8:0,9 ;
    le produit alimentaire cuit possédant moins de 30 pour cent de sucre sur la base du poids du produit alimentaire cuit ;
    le produit alimentaire cuit comprenant 60 à 80 pour cent de composant de pâte cuit et 20 à 40 pour cent de composant de fourrage ;
    le composant de pâte cuit et le composant de fourrage étant en des quantités et ayant des activités de l'eau qui sont efficaces pour fournir au produit alimentaire cuit une activité de l'eau de 0,5 à 0,8 après stockage à la température ambiante pendant deux semaines dans un emballage sous film hermétiquement scellé ; et
    le produit alimentaire cuit ayant une durée de conservation d'au moins six mois lors d'un stockage à 21 °C (70 °F) dans un emballage sous film hermétiquement scellé.

2.  Produit de pâte fourré cru comportant au moins deux composants, le produit de pâte fourrée crue comprenant :

    un composant de pâte ayant une activité de l'eau de 0,7 à 0,9, dans lequel le composant de pâte cru comprend 21,0 à 70,0 pour cent de farine, 0,5 à 5 pour cent d'émulsifiant, 0,1 à 10 pour cent d'enzyme, 0,5 à 5,0 pour cent d'agent levant, 0,2 à 15,0 pour cent de matière grasse solide à la température ambiante, 0,4 à 20,0 pour cent d'huile liquide à la température ambiante, 0,5 à 5 pour cent d'hydrocolloïde, 0,5 à 10,0 pour cent de fibre insoluble, et 0,5 à 10,0 pour cent de polyol ; et un composant de fourrage ayant une activité de l'eau de 0,4 à 0,9, dans lequel le composant de fourrage comprend 10,0 à 95,0 pour cent de composant d'arôme, 0,5 à 15,0 pour cent d'hydrocollo'ide, 0,5 à 6,0 pour cent d'émulsifiant, 0,5 à 10,0 pour cent de polyol, 2,0 à 25,0 pour cent de matière grasse solide à la température ambiante, 2,0 à 20,0 pour cent d'huile liquide à la température ambiante et 0,5 à 15,0 pour cent de fibre soluble ;
    le composant de pâte enrobant le composant de fourrage ;
    le composant de pâte ayant une texture différente de la texture du composant de fourrage ;
    le produit de pâte fourré cru ayant moins de 30 pour cent de sucre ;
    le rapport des activités de l'eau du composant de pâte au composant de fourrage allant de 0,7:0,4 à 0,9:0,9 ;
    le composant de pâte constituant 65 à 85 pour cent du produit de pâte fourré cru ;

le composant de fourrage constituant 20 à 40 pour cent du produit de pâte fourré cru ;

le composant de pâte et le composant de fourrage étant en des quantités et présentant des activités de l'eau qui sont efficaces pour fournir, après cuisson, un produit alimentaire cuit avec une activité de l'eau de 0,5 à 0,8 après stockage à la température ambiante pendant deux semaines dans un emballage sous film ; et

le produit alimentaire cuit ayant une durée de conservation d'au moins six mois lors d'un stockage à 21 °C (70 °F) dans un emballage sous film.

3. Produit selon la revendication 1 ou la revendication 2, dans lequel le composant de pâte cuit est adjacent au, et assure l'interface avec le composant de fourrage, et le composant de pâte cuit a une masse volumique de 0,1 à 0,5 g/cm3 (g/cm$^3$).

4. Produit selon l'une quelconque des revendications 1 à 3, dans lequel le composant de pâte inclut de la farine possédant une protéine en une quantité permettant de fournir 8 à 15 pour cent de gluten dans la pâte.

5. Procédé de fabrication d'un produit de pâte fourré cuit possédant au moins deux composants, le procédé comprenant :

le mélange de 21,0 à 70,0 pour cent de farine, 0,5 à 5,0 pour cent d'agent levant, 0,1 à 10 pour cent d'enzyme, 0,5 à 5 pour cent d'émulsifiant, 0,2 à 15,0 pour cent de matière grasse solide à la température ambiante, 0,4 à 20,0 pour cent d'huile liquide à la température ambiante, 0,5 à 5 pour cent d'hydrocolloïde, 0,5 à 10,0 pour cent de fibre insoluble, 0,5 à 10,0 pour cent de polyol, de l'eau, du sucre, et du sel, pour fournir un composant de pâte possédant une activité de l'eau de 0,6 à 0,9 et pour fournir une pâte cuite ayant une masse volumique de 0,1 à 0,55 g/cm3 (g/cm$^3$) ;

le mélange de 10,0 à 95,0 pour cent de composant d'arôme, 5 à 10,0 pour cent de polyol, 0,5 à 15,0 pour cent d'hydrocolloïde, 0,5 à 6,0 pour cent d'émulsifiant, 2,0 à 25,0 pour cent de matière grasse solide à la température ambiante, 2,0 à 20,0 pour cent d'huile liquide à la température ambiante, 0,5 à 15,0 pour cent de fibre soluble, et du sucre, pour fournir un composant de fourrage ayant une activité de l'eau de 0,4 à 0,9 ;

l'enrobage du composant de fourrage avec le composant de pâte pour fournir un produit de pâte fourré cru avec le composant de pâte étant adjacente au, et assurant l'interface avec le composant de fourrage, le composant de pâte ayant une texture différente de la texture du composant de fourrage ;

le rapport des activités de l'eau du composant de pâte au composant de fourrage dans le produit de pâte fourré cru allant de 0,7:0,9 à 0,5:0,8 ;

le produit de pâte fourré cru comprenant 65 à 85 pour cent de composant de pâte ;

le composant de fourrage constituant 20 à 40 pour cent de produit de pâte fourré cru ; et la cuisson du produit de pâte fourré cru pour fournir un produit de pâte fourré cuit ;

le composant de pâte et le composant de fourrage étant en des quantités et présentant des activités de l'eau qui sont efficaces pour fournir, après cuisson, un produit alimentaire fourré cuit avec une activité de l'eau de 0,5 à 0,8 après stockage à la température ambiante pendant deux semaines dans un emballage sous film hermétiquement scellé ; et

le produit alimentaire fourré cuit ayant une durée de conservation d'au moins six mois lors d'un stockage à 21 °C (70 °F) dans un emballage sous film hermétiquement scellé.

6. Procédé de fabrication d'un produit alimentaire fourré possédant au moins deux composants, le procédé comprenant :

le mélange de 21,0 à 70,0 pour cent de farine, 0,5 à 5,0 pour cent d'agent levant, 0,1 à 10 pour cent d'enzyme, 0,5 à 5 pour cent d'émulsifiant, 0,2 à 15,0 pour cent de matière grasse solide à la température ambiante, 0,4 à 20,0 pour cent d'huile liquide à la température ambiante, 0,5 à 5 pour cent d'hydrocolloïde, 0,5 à 10,0 pour cent de fibre insoluble, 0,5 à 10,0 pour cent de polyol, de l'eau, du sucre et du sel, pour fournir un composant de pâte ayant une activité de l'eau de 0,7 à 0,9 ;

la cuisson du composant de pâte pendant un temps, et à une température efficaces pour fournir un composant de pâte cuit avec une activité de l'eau de 0,5 à 0,8 ;

le mélange de 10,0 à 95,0 pour cent de composant d'arôme, 0,5 à 10,0 pour cent de polyol, 0,5 à 15,0 pour cent d'hydrocolloïde, 0,5 à 6,0 pour cent d'émulsifiant, 2,0 à 25,0 pour cent de matière grasse solide à la température ambiante, 2,0 à 20,0 pour cent d'huile liquide à la température ambiante, 0,5 à 15,0 pour cent de fibre soluble, et du sucre, pour fournir un composant de fourrage ayant une activité de l'eau de 0,4 à 0,8 ;

le fourrage du composant de pâte cuit avec le composant de fourrage pour fournir le produit fourré ;

le composant de pâte cuit ayant une texture différente de la texture du composant de fourrage ;

le rapport des activités de l'eau du composant de pâte cuit au composant de fourrage dans le produit alimentaire fourré allant de 0,7:0,8 à 0,8:0,8 lors d'un stockage après deux semaines dans un emballage sous film hermétiquement scellé à la température ambiante ;

le produit alimentaire fourré comprenant 60 à 80 pour cent de composant de pâte cuit et 20 à 40 pour cent de composant de fourrage ;

le composant de pâte cuit et le composant de fourrage étant en des quantités et présentant des activités de l'eau qui sont efficaces pour fournir au produit alimentaire fourré une activité de l'eau de 0,6 à 0,8 après stockage à la température ambiante pendant deux semaines dans un emballage sous film hermétiquement scellé à la température ambiante ;

le produit alimentaire fourré ayant une durée de conservation d'au moins six mois lors d'un stockage à 21 °C (70 °F) dans un emballage sous film hermétiquement scellé.

7. Procédé selon la revendication 5 ou la revendication 6, dans lequel les quantités et rapports de farine, de fibre, d'eau, de gomme, d'émulsifiant et d'enzyme efficaces pour fournir à un composant de pâte cuit adjacent au, et assurant l'interface avec le composant de fourrage une masse volumique de 0,1 à 0,5 g/cm3 (g/cm$^3$).

8. Procédé selon l'une quelconque des revendications 5 à 7, où le procédé comprend en outre l'ajout d'éthanol au composant de pâte cuit en une quantité de 0,5 à 1,0 pour cent.

9. Procédé selon l'une quelconque des revendications 5 à 8, où le procédé comprend en outre un traitement à la vapeur du composant de pâte.

FIG. 1

# FIG. 2

**EP 2 542 091 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5145699 A, Dijkshoorn
- EP 1133920 A
- US 4721622 A
- US 5059433 A
- EP 1036504 A